(19) Europäisches Patentamt
European Patent Office
Office européen des brevets

(11) EP 4 327 679 A1

(12) EUROPEAN PATENT APPLICATION
published in accordance with Art. 153(4) EPC

(43) Date of publication:
28.02.2024 Bulletin 2024/09

(21) Application number: 23801286.8

(22) Date of filing: 03.03.2023

(51) International Patent Classification (IPC):
A24F 40/50 (2020.01)          A24F 40/51 (2020.01)
A24F 40/42 (2020.01)          A24F 40/485 (2020.01)
A24F 40/46 (2020.01)          H02J 7/00 (2006.01)

(52) Cooperative Patent Classification (CPC):
A24F 40/42; A24F 40/46; A24F 40/485;
A24F 40/50; A24F 40/51; H02J 7/00

(86) International application number:
PCT/KR2023/002896

(87) International publication number:
WO 2023/249202 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.06.2022 KR 20220074862

(71) Applicant: KT & G Corporation
Daejeon 34337 (KR)

(72) Inventors:
• BAE, Hyung Jin
  Daejeon 34128 (KR)
• KO, Wonyoung
  Daejeon 34128 (KR)
• SON, Giho
  Daejeon 34128 (KR)

(74) Representative: Ter Meer Steinmeister & Partner
Patentanwälte mbB
Nymphenburger Straße 4
80335 München (DE)

(54) **AEROSOL GENERATING DEVICE USING CAPACITIVE TOUCH SENSING**

(57) An aerosol generating device using capacitive touch sensing is disclosed. The aerosol generating device using capacitive touch sensing includes a housing, an aerosol outlet, a cartridge, a heater, a controller, and a touch sensor, and the touch sensor may be configured to transmit contact area information to the controller, and the controller may be configured to adjust a power value applied to the heater based on the contact area information.

FIG. 2

EP 4 327 679 A1

## Description

Technical Field

The embodiments below relate to an aerosol generating device using capacitive touch sensing.

Background Art

Recently, demands for alternative ways to overcome disadvantages of general cigarettes have increased. For example, there is a growing demand for a device for generating an aerosol by heating an aerosol generating material rather than using a method of generating an aerosol by burning a cigarette. Accordingly, research on a heating-type aerosol generating device is being actively conducted. A conventional heating-type aerosol generating device has limitations in that the aerosol generated to prevent carbonization of the cartridge wick stays constant or increases even when a smoker wants a larger amount of atomization. Therefore, it is necessary to develop an aerosol generating device capable of adjusting the amount of atomization according to an aerosol smoker's preference. For example, Korean Patent Publication No. 10-2013-0036585 discloses an aerosol generating device.

The above description has been possessed or acquired by the inventor(s) in the course of conceiving the present disclosure and is not necessarily an art publicly known before the present application is filed.

Disclosure of the Invention

Technical Goals

An aspect of the embodiments is to provide an aerosol generating device using capacitive touch sensing for which a smoker may adjust the amount of atomization.

The technical goals obtainable from the embodiments are not limited to the above-mentioned technical goals, and other unmentioned technical goals may be clearly understood from the following description by one of ordinary skill in the art to which the present disclosure pertains. Technical Solutions

An aerosol generating device using capacitive touch sensing according to the embodiments is disclosed. The aerosol generating device using capacitive touch sensing includes a housing, an aerosol outlet provided in the housing and having one side exposed to the outside, a cartridge provided in the housing and configured to store an aerosol generating substrate, a heater provided in the housing and configured to generate an aerosol by heating the cartridge, a controller configured to control an operation of the heater, and a touch sensor provided in an outer circumferential surface of the housing, wherein the touch sensor is configured to transmit contact area information to the controller, and the controller is configured to adjust a power value applied to the heater based on the contact area information.

According to an aspect, the touch sensor may include a capacitive sensor.

According to an aspect, capacitance of the touch sensor may increase when a contact area increases, and the controller may be configured to calculate a variation in a capacitance and apply the power value to the heater.

According to an aspect, the aerosol generating device using capacitive touch sensing may further include a puff sensor configured to detect an intensity of a puff and transmit the intensity to the controller.

According to an aspect, the controller may further include a memory, and the memory may be configured to store a current value at the time of a previous puff.

According to an aspect, the controller may be configured to generate a compensation current value by comparing contact area information transmitted from the touch sensor at the time of a previous puff to contact area information transmitted from the touch sensor at the time of a current puff and add or subtract the compensation current value to or from the current value at the time of the previous puff.

According to an aspect, the controller may be configured to adjust the power value applied to the heater based on the following equation $P_{nPuff}=V_{BAT}(I_{(n-1Puff)}+I_{\Delta C})$, wherein $P_{nPuff}$ may denote a power value at the time of the current puff, $V_{BAT}$ may denote a voltage value applied from a battery, $I_{(n-1Puff)}$ may denote the current value at the time of the previous puff, and $I_{\Delta C}$ may denote the compensation current value.

According to an aspect, the touch sensor may be provided in at least one outer circumferential surface of the housing.

According to an aspect, the housing may include an end portion surface in which the aerosol outlet is disposed, a first side perpendicular to the aerosol outlet, and a second side perpendicular to the aerosol outlet and opposite to the first side, and the touch sensor may include a first touch sensor disposed on the first side and a second touch sensor disposed on the second side.

Effects

As described above, according to embodiments, an aerosol generating device using capacitive touch sensing may include a touch sensor so that a smoker may easily adjust the amount of atomization by changing a contact area of the touch sensor.

The effects of the aerosol generating device using capacitive touch sensing according to an embodiment are not limited to the above-mentioned effects, and other unmentioned effects can be clearly understood from the following description by one of ordinary skill in the art.

Brief Description of Drawings

FIG. 1 is a diagram illustrating a cross section of an aerosol generating device using capacitive touch sensing, according to an embodiment.

FIG. 2 is a block diagram illustrating an aerosol generating device using capacitive touch sensing, according to an embodiment.

FIG. 3 is a diagram illustrating a cross section of a cartridge of FIG. 1 according to an embodiment.

FIG. 4 is a diagram illustrating a housing provided with a touch sensor, according to an embodiment.

FIG. 5 is a diagram illustrating the operation principle of a touch sensor according to an embodiment.

Best Mode for Carrying Out the Invention

Hereinafter, embodiments will be described in detail with reference to the accompanying drawings. However, various alterations and modifications may be made to the embodiments. Here, the embodiments are not meant to be limited by the descriptions of the present disclosure. The embodiments should be understood to include all changes, equivalents, and replacements within the idea and the technical scope of the disclosure.

The terminology used herein is for the purpose of describing particular embodiments only and is not intended to be limiting. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

When describing the embodiments with reference to the accompanying drawings, like reference numerals refer to like components and a repeated description related thereto will be omitted. In the description of embodiments, detailed description of well-known related structures or functions will be omitted when it is deemed that such description will cause ambiguous interpretation of the present disclosure.

In addition, terms such as first, second, A, B, (a), (b), and the like may be used to describe components of the embodiments. These terms are used only for the purpose of discriminating one component from another component, and the nature, the sequences, or the orders of the components are not limited by the terms. It should be noted that if one component is described as being "connected", "coupled" or "joined" to another component, the former may be directly "connected," "coupled", and "joined" to the latter or "connected", "coupled", and "joined" to the latter via another component.

A component, which has the same common function as a component included in any one embodiment, will be described by using the same name in other embodiments. Unless disclosed to the contrary, the configuration disclosed in any one embodiment may be applied to other embodiments, and the specific description of the repeated configuration will be omitted.

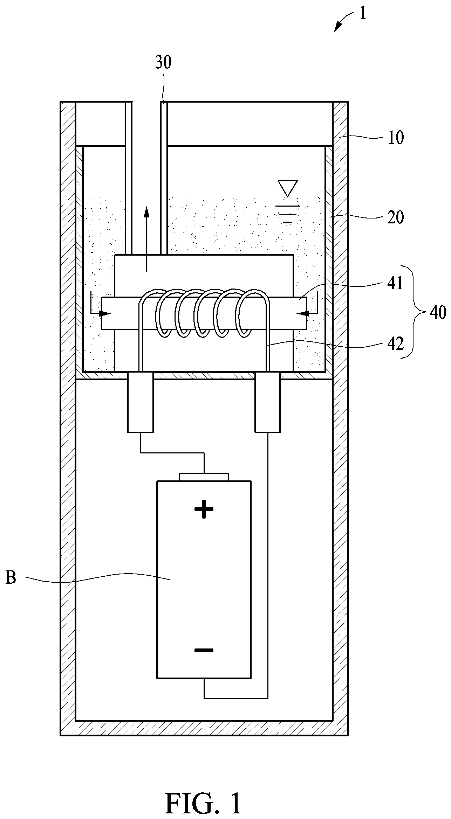

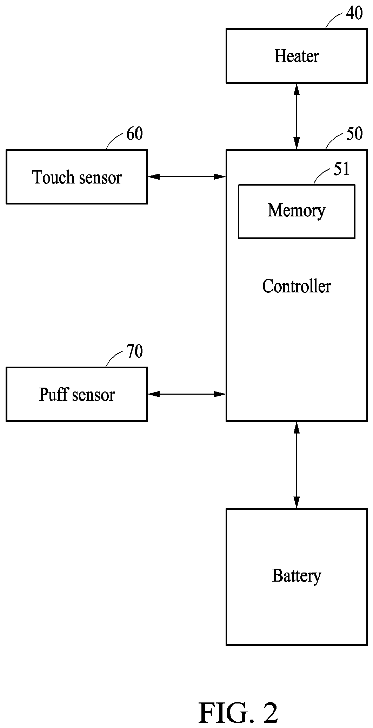

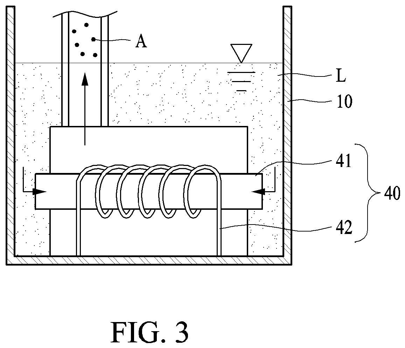

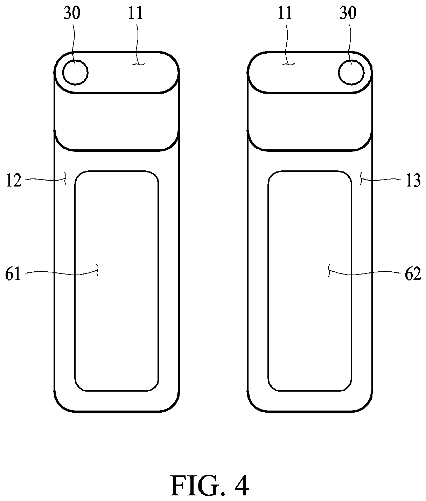

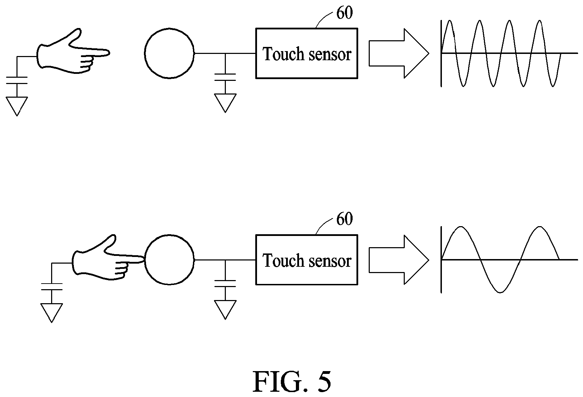

An aerosol generating device using capacitive touch sensing will be described with reference to the drawings. For reference, FIG. 1 is a cross-sectional diagram of an aerosol generating device using capacitive touch sensing, according to an embodiment, FIG. 2 is a block diagram illustrating an aerosol generating device using capacitive touch sensing, according to an embodiment, FIG. 3 is a cross-sectional diagram of a cartridge of FIG. 1 according to an embodiment, FIG. 4 is a diagram illustrating a housing provided with a touch sensor, according to an embodiment, and FIG. 5 is a diagram illustrating the operation principle of a touch sensor according to an embodiment.

Referring to FIG. 1 to 4, an aerosol generating device 1 using capacitive touch sensing according to an embodiment may include a housing 10, an aerosol outlet 30, a cartridge 20, a heater 40, a controller 50, and a touch sensor 60.

The housing 10 according to an embodiment may form the exterior of the aerosol generating device 1 using capacitive touch sensing. In the housing 10, a battery B may be provided in the inner space, and although not shown in the drawing, a circuit board (not shown) with an electronic chip (not shown) may be provided. On the front end portion of the housing 10, a light emitting diode (not shown) that lights up according to an inhaling action or a display unit (not shown) that displays inhalation information may be provided. Here, a rechargeable polymer lithium battery, a lithium ion battery, or the like may be used as the battery B.

The aerosol outlet 30 according to an embodiment may be provided in the housing 10 and may have one side exposed to the outside. The other side of the aerosol outlet 30 may be connected to the cartridge 20 that is described below and may discharge an aerosol A generated from the cartridge 20 to the outside. For example, the aerosol outlet 30 may have a straw shape protruding from one side of the cartridge 20 but is not necessarily limited thereto. In addition, an opening portion of a gourd shape, a cylindrical shape, a hole shape, and the like may be included. In addition, the material of the opening portion may be made of various materials such as plastic synthetic resin, stainless steel, glass, Teflon, rubber, and the like.

Referring to FIG 2, the cartridge 20 according to an embodiment may be provided in the housing 10 and may store an aerosol forming substrate L. Here, the "aerosol forming substrate L" may refer to a material capable of forming the aerosol A. The aerosol A may include a volatile compound. The aerosol forming substrate L may be solid or liquid. For example, a solid aerosol forming substrate L may include solid materials based on tobacco raw materials such as tobacco sheets, cut tobacco leaves, reconstituted tobacco, and the like, and a liquid aerosol forming substrate L may include a liquid composition based on nicotine, a tobacco extract, and/or various flavoring agents. However, the scope of the present embodiment is not limited thereto.

The heater 40 according to an embodiment may be disposed in the cartridge 20 and may heat the cartridge 20 to generate the aerosol A. The heater 40 may include a wick 41 and a heating coil 42. The wick 41 may include at least one of cotton fiber, ceramic fiber, glass fiber, or porous ceramic, or a compound thereof, but is not limited thereto. The heating coil 42 may be disposed in a form of winding the wick 41, which may be connected to the controller 50 that is described below to generate heat, thereby heating the wick 41. By the heated wick 41, the aerosol A may be generated from the aerosol forming substrate L stored in the cartridge 20.

The controller 50 according to an embodiment may control the operation of the heater 40. In addition, the controller 50 may control the overall operation of the aerosol generating device 1 using capacitive touch sensing. In an embodiment, the controller 50 may include at least one processor. The processor may be implemented as an array of a plurality of logic gates or may be implemented as a combination of a general-purpose microprocessor and a memory 51 in which a program executable by the microprocessor is stored. In addition, it is to be understood by one of ordinary skill in the art to which the present disclosure pertains that the processor may be implemented in other types of hardware.

The controller 50 according to an embodiment may control the temperature of the heater 40 by controlling the supply of power to the heater 40. For example, the controller 50 may control the supply of power to the heater 40 by controlling switching of a switching element between the battery B and the heater 40. In another example, a direct heating circuit may control the supply of power to the heater 40 according to a control command from the controller 50.

Referring to FIG. 4, the touch sensor 60 according to an embodiment may be provided in the outer circumferential surface of the housing 10. The touch sensor 60 may be provided in at least one outer circumferential surface of the housing 10. For example, the housing 10 may include an end portion surface 11 in which the aerosol outlet 30 may be disposed, a first side surface 12 perpendicular to the aerosol outlet 30, and a second side surface 13 that is perpendicular to the aerosol outlet 30 and is on the opposite side to the first side surface 12. The touch sensor 60 may include a first touch sensor 61 disposed on the first side surface 12 and a second touch sensor 62 disposed on the second side surface 13.

Referring to FIG. 5, the touch sensor 60 according to an embodiment may be configured as a capacitive sensor. The capacitive sensor is a sensor that operates by detecting a change in electrical capacity/capacitance, which occurs when a body part or a specific object is in contact with the capacitive sensor. The touch sensor 60 may have an electrical capacity/capacitance value of a predetermined size when a body part or a specific object is not in contact and may have the same effect as when touch sensors (e.g., the touch sensor 60) are connected in parallel when a body part or a specific object is in contact. That is, when a body part or a specific object contacts the touch sensor 60, the electrical capacity/capacitance value may increase, and a variation in an electrical capacity/capacitance may be transmitted to the controller 50.

Here, the capacitance of the touch sensor 60 according to an embodiment may increase when the contact area increases, and the controller 50 may calculate the variation in the capacitance and apply a power value to the heater 40. The touch sensor 60 may transmit contact area information to the controller 50, and the controller 50 may adjust the power value applied to the heater 40 based on the contact area information.

In addition, the aerosol generating device 1 using capacitive touch sensing according to an embodiment may further include a puff sensor 70. In the following embodiments, the term "puff" refers to inhalation by a user, and inhalation refers to a situation in which a user draws in an aerosol into their oral cavity, nasal cavity, or lungs through the mouth or nose.

The puff sensor 70 according to an embodiment may detect the intensity of the puff and transmit the intensity of the puff to the controller 50. The puff sensor 70 may detect a puff by a user based on various physical changes in an airflow path or airflow channel. For example, the puff sensor 70 may detect the puff by the user based on one of a temperature change, a flow change, a voltage change, and a pressure change. The puff sensor 70 may be provided in the aerosol outlet 30 to detect puffs but is not necessarily limited thereto.

Here, the controller 50 according to an embodiment may further include a memory 51, and the memory 51 may store a current value at the time of a previous puff. Here, the memory 51, which is hardware for storing various pieces of data processed by the aerosol generating device 1 using capacitive touch sensing, may store data processed by the controller 50 and data to be processed thereby. The memory 51 may include at least one type of storage medium of flash memory type memory, hard disk type memory, multimedia card micro type memory, card type memory (e.g., an SD or xD memory), random access memory (RAM), static random-access memory (SRAM), read-only memory (ROM), electrically erasable programmable read-only memory (EEPROM), programmable read-only memory (PROM), magnetic memory, a magnetic disk, or an optical disk.

The memory 51 according to an embodiment may store a current value at the time of a previous puff that is applied to the heater 40 by the controller 50 to generate reference information for determining a current value at the time of a subsequent puff.

In addition, the memory 51 may store an operating time of the aerosol generating device 1 using capacitive touch sensing, the maximum number of puffs, the current number of puffs, at least one temperature profile, data associated with a smoking pattern of the user, or the like.

Here, the controller 50 may generate a compensation current value by comparing contact area information transmitted from the touch sensor 60 at the time of a previous puff to contact area information transmitted from the touch sensor 60 at the time of a current puff and add or subtract the compensation current value to or from the current value at the time of the previous puff. That is, the controller 50 may add or subtract the variation in the contact area information transmitted from the touch sensor 60 to or from the current value at the time of the previous puff that is applied to the heater 40 by the controller 50 and that is stored in the memory 51 and may supply power to the heater 40, thereby adjusting the amount of aerosol generation according to the user's touch intensity and the like.

According to the configuration described above, the controller 50 according to an embodiment may adjust the power value applied to the heater 40 according to the following equation.

$$P_{nPuff}=V_{BAT}(I_{(n\text{-}1Puff)}+I_{\Delta C})$$

Here, $P_{nPuff}$ may be a power value at the time of the current puff, $V_{BAT}$ may be a voltage value applied from a battery, $I_{(n\text{-}1Puff)}$ may be the current value at the time of the previous puff, and $I_{\Delta C}$ may be the compensation current value. The controller 50 may store the current value $I_{(n\text{-}1Puff)}$ at the time of the previous puff in the memory 51, add or subtract the compensation current value $I_{\Delta C}$ derived by comparing the contact area information transmitted from the touch sensor 60 at the time of the previous puff to the contact area information transmitted from the touch sensor 60 at the time of the current puff to or from the current value I(n-1Puff) at the time of the previous puff, and apply the current value to the heater 40. For example, if the contact area increases at the time of the current puff than at the time of the previous puff, the compensation current value IΔC may be derived according to the increased contact area and added to the current value I(n-1Puff) at the time of the previous puff, and the current value may be applied to the heater 40.

In this case, the power value (PnPuff) applied to the heater 40 may be increased compared to the previous puff and accordingly, the amount of atomization may be increased. That is, the controller 50 according to an embodiment may add or subtract the compensation current value IΔC to or from the current value I(n-1Puff) at the time of the previous puff and apply the current value to the heater 40, and thus, the power value PnPuff at the time of the current puff may be adjusted and the amount of aerosol generation may be adjusted.

According to embodiments, the aerosol generating device 1 using capacitive touch sensing may include a touch sensor interlocked with a controller to adjust the amount of atomization according to a user's preference.

In addition, the aerosol generating device 1 using capacitive touch sensing may have the advantage of being easy and simple to operate because the amount of atomization may be adjusted through the change in the contact area of the touch sensor.

The descriptions of the above-described embodiments are only examples, and it will be understood by one of ordinary skill in the art that various changes and equivalents may be made thereto. Therefore, the scope of the disclosure should be defined by the appended claims, and all differences within the scope equivalent to those described in the claims will be construed as being included in the scope of protection defined by the claims.

The features and aspects of any embodiment(s) described above may be combined with features and aspects of any other embodiment(s) without resulting in apparent technical conflicts.

## Claims

1. An aerosol generating device using capacitive touch sensing, the aerosol generating device comprising:

   a housing;
   an aerosol outlet provided in the housing and having one side exposed to the outside;
   a cartridge provided in the housing and configured to store an aerosol generating substrate;
   a heater provided in the housing and configured to generate an aerosol by heating the cartridge;
   a controller configured to control an operation of the heater; and
   a touch sensor provided in an outer circumferential surface of the housing,
   wherein the touch sensor is configured to transmit contact area information to the controller, and the controller is configured to adjust a power value applied to the heater based on the contact area information.

2. The aerosol generating device of claim 1, wherein the touch sensor comprises a capacitive sensor.

3. The aerosol generating device of claim 2, wherein capacitance of the touch sensor increases when a contact area increases, and the controller is configured to calculate a variation in a capacitance and apply the power value to the heater.

4. The aerosol generating device of claim 1, further comprising a puff sensor configured to detect an intensity of a puff and transmit the intensity to the controller.

5. The aerosol generating device of claim 4, wherein the controller further comprises a memory, and the memory is configured to store a current value at the time of a previous puff.

6. The aerosol generating device of claim 5, wherein the controller is configured to generate a compensation current value by comparing contact area information transmitted from the touch sensor at the time of a previous puff to contact area information transmitted from the touch sensor at the time of a current puff and add or subtract the compensation current value to or from the current value at the time of the previous puff.

7. The aerosol generating device of claim 6, wherein the controller is configured to adjust the power value applied to the heater based on the following equation:

$$P_{nPuff} = V_{BAT}(I_{(n-1Puff)} + I_{\Delta C}),$$

wherein $P_{nPuff}$ denotes a power value at the time of the current puff, $V_{BAT}$ denotes a voltage value applied from a battery, $I_{(n-1Puff)}$ denotes the current value at the time of the previous puff, and $I_{\Delta C}$ denotes the compensation current value.

8. The aerosol generating device of claim 1, wherein the touch sensor is provided in at least one outer circumferential surface of the housing.

9. The aerosol generating device of claim 8, wherein the housing comprises:

an end portion surface in which the aerosol outlet is disposed;
a first side perpendicular to the aerosol outlet; and
a second side perpendicular to the aerosol outlet and opposite to the first side, and the touch sensor comprises:

a first touch sensor disposed on the first side; and
a second touch sensor disposed on the sec-

ond side.

FIG. 1

FIG. 2

FIG. 3

FIG. 4

FIG. 5

## INTERNATIONAL SEARCH REPORT

| International application No. |
| --- |
| **PCT/KR2023/002896** |

**A.    CLASSIFICATION OF SUBJECT MATTER**

**A24F 40/50**(2020.01)i; **A24F 40/51**(2020.01)i; **A24F 40/42**(2020.01)i; **A24F 40/485**(2020.01)i; **A24F 40/46**(2020.01)i; **H02J 7/00**(2006.01)i

According to International Patent Classification (IPC) or to both national classification and IPC

**B.    FIELDS SEARCHED**

Minimum documentation searched (classification system followed by classification symbols)

A24F 40/50(2020.01); A24F 40/10(2020.01); A24F 40/42(2020.01); A24F 40/51(2020.01); A24F 40/60(2020.01); A24F 47/00(2006.01); G06F 3/0488(2013.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 터치(touch), 센서(sensor), 퍼프(puff), 히터(heater), 면적(area), 제어(control)

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-2021-0081561 A (EM-TECH CO., LTD.) 02 July 2021 (2021-07-02) See paragraphs [0007]-[0010] and [0016]; and figure 1. | 1-5,8 |
| A | | 6,7,9 |
| Y | KR 10-2018-0091207 A (SAMSUNG ELECTRONICS CO., LTD.) 16 August 2018 (2018-08-16) See paragraphs [0025] and [0045]-[0051]. | 1-5,8 |
| Y | KR 10-2021-0014016 A (KT & G CORPORATION) 08 February 2021 (2021-02-08) See paragraph [0072]. | 5 |
| A | KR 10-2021-0101045 A (KT & G CORPORATION) 18 August 2021 (2021-08-18) See entire document. | 1-9 |
| A | WO 2021-032668 A1 (PHILIP MORRIS PRODUCTS S.A.) 25 February 2021 (2021-02-25) See entire document. | 1-9 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 May 2023** | **30 May 2023** |

| Name and mailing address of the ISA/KR | Authorized officer |
| --- | --- |
| **Korean Intellectual Property Office** **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/002896**

| Patent document cited in search report | | | Publication date (day/month/year) | Patent family member(s) | | | Publication date (day/month/year) |
|---|---|---|---|---|---|---|---|
| KR | 10-2021-0081561 | A | 02 July 2021 | None | | | |
| KR | 10-2018-0091207 | A | 16 August 2018 | US | 10656747 | B2 | 19 May 2020 |
| | | | | US | 2018-0224993 | A1 | 09 August 2018 |
| KR | 10-2021-0014016 | A | 08 February 2021 | CN | 112584719 | A | 30 March 2021 |
| | | | | EP | 3820317 | A1 | 19 May 2021 |
| | | | | JP | 2021-535731 | A | 23 December 2021 |
| | | | | US | 2023-0096029 | A1 | 30 March 2023 |
| | | | | WO | 2021-020699 | A1 | 04 February 2021 |
| KR | 10-2021-0101045 | A | 18 August 2021 | None | | | |
| WO | 2021-032668 | A1 | 25 February 2021 | CN | 114173589 | A | 11 March 2022 |
| | | | | EP | 4017303 | A1 | 29 June 2022 |
| | | | | JP | 2022-545228 | A | 26 October 2022 |
| | | | | KR | 10-2022-0047782 | A | 19 April 2022 |
| | | | | US | 2022-0287375 | A1 | 15 September 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130036585